# EUROPÄISCHE PATENTSCHRIFT

(11) **EP 4 491 427 B1**
(45) Veröffentlichungstag und Bekanntmachung des Hinweises auf die Patenterteilung: **11.03.2026**
(21) Anmeldenummer: 24173477.1
(22) Anmeldetag: 30.04.2024
(51) Int. Cl.: B60K 15/063, B60K 15/07

(54) **AUFPRALLSCHUTZVORRICHTUNG FÜR EINEN GAS- UND/ODER FLÜSSIGGASTANK EINES FAHRZEUGS**
COLLISION PROTECTION DEVICE FOR A GAS AND/OR LIQUEFIED GAS TANK OF A VEHICLE
DISPOSITIF DE PROTECTION CONTRE LES CHOCS POUR UN RÉSERVOIR DE GAZ ET/OU DE GAZ LIQUÉFIÉ D'UN VÉHICULE

(30) Priorität: 09.05.2023 DE 102023112095
(43) Veröffentlichungstag der Anmeldung: 15.01.2025
(73) Patentinhaber: MAN Truck & Bus SE, 80995 München (DE)
(72) Erfinder: Teubner, Daniel, 80995 München (DE); Wagner, Philipp, 80995 München (DE); Philbert, Thomas, 80995 München (DE); Stolz, Alexander, 36157 Weyhers (DE); Hagenmüller, Swen, 36124 Eichenzell (DE); Sobioch, Michael, 84174 Eching (DE)

(56) Entgegenhaltungen:
- DE-A1- 102021 002 358
- DE-A1- 102021 127 612
- DE-A1- 102021 127 621
- US-A1- 2021 260 994

## Beschreibung

Die Erfindung betrifft eine Aufprallschutzvorrichtung für einen Tank zum Speichern von Gas- und/oder Flüssiggas als Kraftstoff für ein Fahrzeug. Die Erfindung betrifft ferner ein Fahrzeug, vorzugsweise einen Lastkraftwagen, mit einer solchen Aufprallschutzvorrichtung.

Zum Stand der Technik ist zunächst auf die DE 10 2021 002 358 A1 zu verweisen, die eine Haltevorrichtung zum Halten eines Wasserstofftanks an einem Kraftwagen betrifft. Die Haltevorrichtung umfasst in ihrer Einbauposition wenigstens zwei in Längserstreckungsrichtung des Wasserstofftanks voneinander beabstandete Verbindungselemente. Die Verbindungselemente sind in der Einbauposition mit einem Rahmenlängsträger des Kraftwagens verbunden, wobei an dem jeweiligen Verbindungselement ein Spanngurt zum Verspannen des Wasserstofftank befestigt ist und wenigstens zwei Strebenelemente vorgesehen sind, welche in Längserstreckungsrichtung an einer Außenseite des Wasserstofftanks voneinander beabstandet anliegen und durch die Spanngurte formschlüssig mit dem Wasserstofftank verspannbar sind. Die wenigstens zwei Strebenelemente sind miteinander vor einer in Fahrzeuglängsrichtung vorne liegenden Stirnseite des Wasserstofftanks über ein Schutzelement verbunden.

Der Aufbau von Fahrzeugen, die mit Wasserstoff als Energieträger betrieben werden, erfordert die Berücksichtigung von Seitencrashs, bei denen die Wasserstofftanks, sofern sie seitlich am Rahmen befestigt sind, so geschützt sein müssen, dass es nicht zur Beschädigung der Tanks oder infolgedessen zum Gasaustritt kommt.

Aus dem Stand der Technik ist bekannt, dass Wasserstofftanks, d. h. entsprechende Druckbehälter zur Speicherung des Wasserstoffs in Typ 1 - 4 unterschieden werden. Hierbei nimmt ausgehend vom metallisch aufgebauten Tank Typ 1 der Anteil an Faserverbundwerkstoff, insbesondere Carbon, immer mehr zu, bis hin zum rein kunststoffbasierten Tank Typ 4. Der vorliegenden Erfindung liegt u. a. die Erkenntnis zu Grunde, dass je höher der Anteil an Carbonfasern an der Gesamtstruktur ist, und je maßgeblicher somit der Faserverbundwerkstoff an der Gesamtfestigkeit beteiligt ist, umso komplexer wird die Festigkeits- und insbesondere die Crashsimulation. Bisher existieren wenig bekannte Daten und Materialparameter, insbesondere im Hinblick auf dynamische Crashvorgänge bei tiefkalten Temperaturen. Dies ist von Relevanz, wenn Wasserstoff als tiefkaltes Druckgas (Cryo-Gas) gespeichert wird. Aber auch für das Crashverhalten von Typ 4 Tanks bei Raumtemperatur sind die Materialparameter bisher nicht soweit abgesichert, dass Crashlastfälle ohne praktischen Versuch freigegeben werden können.

Bisher werden Druckgasbehälter zur Speicherung von Wasserstoff meist mit L- oder C-förmigen Trägern und Spannbändern am Lkw Trägerrahmen (LKW-Hauptrahmen) befestigt. Ein zusätzlicher Schutz nach außen ist, wenn, dann nur in Form des seitlichen Unterfahrschutzes ausgeführt. Gegen einen Crash mit einem Pkw sind die Behälter nicht zusätzlich gesichert. Für komprimiertes Erdgas, CNG, ist dies zulässig, da hier keine Crashvorschriften zu erfüllen sind.

Für Wasserstoff ist in der Regelung UN / ECE R 134 der Wirtschaftskommission der Vereinten Nationen für Europa (UNECE) ein seitlicher Abstand von 200mm zur Fahrzeugaußenkante vorgesehen. Wird dieser nicht eingehalten, ist ein Seitencrash mit einer Alu-Barriere nach R95 zu erfüllen. Die in der vorstehend genannten Norm vorgesehene Lösung mit den 200mm Freiraum ist nicht zu bevorzugen, da man dadurch einerseits das Tankvolumen stark einschränkt und andererseits die Tanks im Falle einer Kollision doch schutzlos gegenüber dem Aufprallgegner sind.

Entsprechend ist es daher die Aufgabe der Erfindung, eine Lösung bereitzustellen, mit der möglichst die Nachteile der bisherigen Lösungen vermieden werden können. Insbesondere ist es dabei eine Aufgabe der Erfindung, eine verbesserte Technik zum sicheren Bereitstellen von Tanks zum Speichern von Gas- und/oder Flüssiggas als Kraftstoff für ein Fahrzeug bereitzustellen, mit der solche Tanks zuverlässiger gegen Crash-bedingte Beschädigungen geschützt werden können und mit der ein Nachweis der Crashsicherheit in der Simulation einfacher durchführbar ist.

Die Aufgabe wird gelöst durch die Merkmale des unabhängigen Anspruchs 1. Vorteilhafte Weiterbildungen sind in den abhängigen Ansprüchen und der Beschreibung angegeben.

Ein erster unabhängiger Aspekt der vorliegenden Offenbarung betrifft eine Aufprallschutzvorrichtung für einen Tank zum Speichern von Gas und/oder Flüssiggas. Unter dem Begriff "Aufprallschutzvorrichtung" soll eine Vorrichtung verstanden werden, die dazu dient, den Tank vor einer crashbedingten Beschädigung zu schützen, so dass das Risiko einer Beschädigung des Tanks, z. B. bei einem Aufprallunfall, reduziert werden kann.

Das Gas und/oder das Flüssiggas dient bevorzugt als Kraftstoff für ein Fahrzeug. Der Tank dient somit vorzugsweise als Tank für ein Fahrzeug, z. B. für einen Lastkraftwagen, LKW. Der Tank kann auch als Druckspeichereinrichtung bezeichnet werden, da das Gas und/oder Flüssiggas darin unter Druckbeaufschlagung gespeichert wird. Das Gas und/oder Flüssiggas kann Wasserstoff sein.

Die Aufprallschutzvorrichtung umfasst eine kastenförmige Crashstruktur, vorzugsweise zum Energieabbau bei einer crashbedingten Energieeinwirkung auf die Aufprallschutzvorrichtung. Die kastenförmige Crashstruktur weist dabei einen Hohlraum zur Aufnahme und Halterung des Tanks auf. Anders ausgedrückt umgibt die Crashstruktur den Tank zumindest teilweise, wenn sich der Tank (der nicht Teil der Aufprallschutzvorrichtung ist) im Hohlraum befindet. Die kastenförmige Crashstruktur kann auch als Crash-Box oder als kastenförmiger Behälter zur Aufnahme und Halterung des Tanks bezeichnet werden. Die kastenförmige Crashstruktur ist ferner als Metallkonstruktion ausgebildet. Dies bedeutet, dass die Crashstruktur aus metallischen Bauteilen gefertigt ist und insbesondere nicht aus Verbundwerkstoffen wie z. B. Carbon-Fasern.

Insgesamt kann dadurch auf vorteilhafte Weise eine sichere Lagerung des Tanks für Gas und/oder Flüssiggas erreicht werden. Im Crash-Fall nimmt die metallische Crash-Struktur große Teile der Crashenergie auf und schützt damit den Tank. Der Tanks hat am Verzehr der Crashenergie nur einen geringeren Anteil. Die kastenförmige Crashstruktur bietet entsprechend einen mechanischen Schutz für den Tank vor einer crashbedingten Energieeinwirkung, da die Crashenergie zumindest teilweise von der kastenförmigen Crashstruktur aufgenommen und abgebaut wird und dadurch nicht oder zumindest nur reduziert an den Tank weitergegeben wird. Das Risiko einer Aufprall- oder Crash-bedingten Beschädigung des Tanks kann dadurch reduziert werden.

Ein weiterer Vorteil ist, dass ein Nachweis der Crash-Sicherheit im Rahmen einer Simulation wesentlich einfacher und/oder genauer ermöglicht wird. Vorstehend wurde bereits festgestellt, dass bisher wenig bekannte Daten und Materialparameter existieren, insbesondere im Hinblick auf dynamische Crashvorgänge bei tiefkalten Temperaturen für Gas- und Flüssiggas-Tanks aus Faserverbundwerkstoffen, anhand derer der Nachweis der Crash-Sicherheit im Rahmen einer Simulation geführt werden könnte. Durch die Bereitstellung der erfindungsgemäßen Aufprallschutzvorrichtung mit der kastenförmigen Crashstruktur als Metallkonstruktion kann eine solche äußerst komplexe Berechnung bzw. Simulation der Crashsicherheit für den Tank vermieden und ersetzt werden durch eine Simulation der Crashsicherheit für die Aufprallschutzvorrichtung. Für die Aufprallschutzvorrichtung kann für einen simulationsbasierten Festigkeitsnachweis die Energieaufnahme nur über metallische Strukturen (der Crashstruktur der Aufprallschutzvorrichtung) mit bekannten und einfacher zugänglichen Materialparametern durchgeführt werden. Die Festigkeit eines verbundwerkstoffbasierten Tanks ist hierbei optional nur in einem Maß zu berücksichtigen, die für den Tank unkritisch ist. Zusammengefasst ist eine Simulation der Crash-Festigkeit der komplex zu berechnenden Strukturen eines Faserbundtanks, bei der die komplexen Tankeigenschaften nachgebildet und simuliert werden müsste, daher nicht nötig. Stattdessen kann die Crash-Festigkeit für die Aufprallschutzvorrichtung, insbesondere deren Crash-Struktur, simuliert werden, was ohne praktische Schwierigkeiten möglich ist aufgrund der im Hinblick auf die Crash-Festigkeit bekannten Materialparametern metallischer Strukturen.

In einer Ausführungsform umfasst die Aufprallschutzvorrichtung ferner eine Montagevorrichtung zur Befestigung der Crashstruktur an einem Trägerrahmen, vorzugsweise einem Rahmenlängsträger des Fahrzeugs. Vorteilhaft dient die Aufprallschutzvorrichtung nicht nur zum Crash-Schutz des Tanks, sondern kann gleichzeitig zur Befestigung des Tanks am Fahrzeug genutzt werden. Die Montagevorrichtung kann mehrere Konsolen oder Montageböcke aufweisen, mittels derer die Aufprallschutzvorrichtung an dem Trägerrahmen befestigbar ist. Diese können als Teil der Crash-Struktur ausgeführt sein oder als separate, daran befestigte Bauteile, ausgeführt sein.

Gemäß einer weiteren bevorzugten Ausführungsform umfasst die kastenförmige Crashstruktur eine Deformationseinrichtung, die an einer Seitenwand der Crashstruktur angeordnet ist oder die die Seitenwand ausbildet, und die im Crashfall unter Abbau von Aufprallkräften deformierbar ist. Die Seitenwand der Crashstruktur mit der Deformationseinrichtung kann diejenige äußere Wand der Crashstruktur sein, die - im montierten Zustand der Crashstruktur am Fahrzeug-, zur Fahrzeugseite hin gerichtet ist und auf der fahrzeugabgewandten Seite der Crashstruktur liegt. Hierdurch kann insbesondere ein Crash-Schutz vor einem Seitenaufprall realisiert sein, was insbesondere für Lastkraftwagen vorteilhaft ist, wo der Tank seitlich am Trägerrahmen befestig wird.

Bevorzugt kann die Deformationseinrichtung mehrfach gebogene Metallprofile, vorzugsweise ausgeführt als Hutprofile, aufweisen. Die mehrfach gebogenen Metallprofile können beispielsweise eine Beplankung der Seitenwand ausbilden. Hierdurch kann eine wirksame Deformationseinrichtung zum Abbau von Aufprallkräften mit leichtem Gewicht realisiert werden.

Die kastenförmige Crashstruktur kann zumindest zu einer Seite hin offen sein. Beispielsweise kann die Crashstruktur zu der Seite hin, die gegenüberliegend von der Deformationseinrichtung liegt, offen sein. Ferner kann die kastenförmige Crashstruktur nach oben hin offen sein.

Die kastenförmige Crashstruktur umfasst zwei untere Trägerelemente und ein oberes, vorzugsweise nur ein oberes, Trägerelement. Die Trägerelemente werden nachfolgend als Längsträger bezeichnet. Sie erstrecken sich in Längsrichtung der Crashstruktur. Im montierten Zustand der Crashstruktur am Fahrzeug korrespondiert die Längsrichtung der Crashstruktur der Längsrichtung des Fahrzeugs. Die Längsträger bilden die tragenden Strukturen der Crashstruktur. An den Längsträgern einer Seite kann z. B. die Deformationseinrichtung befestigt sein, an dem Längsträger (oder den Längsträgern) der gegenüberliegenden Seite kann die Montagevorrichtung befestigt sein, mittelbar oder unmittelbar. Die Längsträger können einteilig oder mehrteilig ausgeführt sein.

Die kastenförmige Crashstruktur umfasst eine vordere und eine hintere Stirnwand, die jeweils an einer der Stirnseiten der Crashstruktur an den Längsträgern befestigt sind. Die Stirnwände bieten einerseits einen Schutz des Tanks vor stirnseitig eindringenden Gegenständen und können gleichzeitig z. B. optional dazu verwendet werden, die Montagevorrichtung zu haltern. Beispielsweise können die Konsolen oder Montageböcke der Montagevorrichtung zur Befestigung der Crashstruktur am Trägerrahmen des Fahrzeugs an den Stirnwänden befestigt sein. Die Stirnwände können als Blechteile ausgeführt sein.

In einer weiteren Ausführungsform umfasst die Aufprallschutzvorrichtung ferner eine Haltevorrichtung für den Tank, die in die kastenförmige Crashstruktur integriert ist.

Beispielsweise kann die Haltevorrichtung Spannbänder umfassen. Die Spannbänder können durch Aufnahmen in den unteren Längsträgern geführt sein. Alternativ können die Spannbänder an anderer Stelle innerhalb der Crashstruktur geführt sein. Die Spannbänder können dazu ausgebildet sein, den Tank umfangseitig zu umschlingen und durch Festziehen der Spannbänder zu verspannen. Die Spannbänder können als Metallbänder mit einem Verspannmechanismus ausgeführt sein. Dadurch können besonders vorteilhaft Tanks mit zylinderförmigen Grundkörper innerhalb der Crashstruktur gesichert werden.

Die Haltevorrichtung kann ferner einen Anschlag aufweisen, vorzugsweise zur Verhinderung eines Verrutschens des Tanks in einer Längsrichtung der Crashstruktur. Der Anschlag kann z. B. an einer der Stirnwände angeordnet sein. Die sichere Lagerung des Tanks wird dadurch verbessert.

Die Haltevorrichtung kann ferner Auflagen für den Tank, die an einem Bodenbereich der Crashstruktur angeordnet sind, aufweisen. Die Auflagen können vorzugsweise Auflagebleche aufweisen, die an den unteren Längsträgern angeordnet sind und/oder einen Teil davon ausbilden. Die Auflagen können z. B. schräge oder an die Tankkrümmung angepasste gekrümmte Auflageflächen aufweisen, die z. B. als angeschrägte Konsolen ausgebildet sein können. Die sichere Lagerung des Tanks wird dadurch weiter verbessert.

Zudem oder alternativ kann die Haltevorrichtung zur Halterung eines Tanks mit Halslagerung ausgeführt sein. Die Haltevorrichtung kann hierbei zwei Lagerelemente zur Lagerung eines Halsbereichs des Tanks aufweisen, die an den Stirnwänden der Crash-Struktur angeordnet sind. Entsprechend dieser Ausführungsform ist die Haltevorrichtung besonders auch für die Lagerung von Tanks mit Halslagerung geeignet.

Eine mögliche Ausführungsform sieht hierbei vor, dass die Lagerelemente jeweils topfförmig ausgeführt sind und an einer der Stirnwänden der Crash-Struktur lösbar befestigt sind. Die lösbare Befestigung erleichtert die Montage.

Die Lagerelemente können zur Aufnahme eines Lagerbocks ausgeführt sein, der wiederum einen Lagerzapfen des Tanks umschließt. Zudem oder alternativ sind die Lagerelemente hinsichtlich ihrer Festigkeit bevorzugt so ausgelegt, dass sie im Crashfall vor dem Lagerbock und dem Lagerzapfen brechen, um eine Ausbruch des Lagerzapfens des Tanks im Crashfall besser verhindern zu können.

In einer weiteren Ausführungsform kann die Aufprallschutzvorrichtung einen Steinschlagschutz für den Tank aufweisen, der an einer Unterseite der kastenförmigen Crashstruktur angeordnet ist. Der Steinschlagschutz kann z. B. als Schutzblech ausgeführt sei. Der Schutz des Tanks kann dadurch weiter verbessert werden.

Weiterhin betrifft die Offenbarung ein Fahrzeug, aufweisend mindestens eine Aufprallschutzvorrichtung, wie hierin beschrieben. Das Fahrzeug umfasst ferner mindestens einen Tank zum Speichern von Gas- und/oder Flüssiggas als Kraftstoff für das Fahrzeug, vorzugsweise einen Wasserstoff-Tank. Hierbei ist der Tank im Hohlraum der kastenförmigen Crash-Struktur aufgenommen und/oder gehaltert. Der im dem Hohlraum der Aufprallschutzvorrichtung gehalterte und/oder halterbare Tank ist bevorzugt ein Tank für Gas und/oder Flüssiggas, der zumindest teilweise aus einem Verbundwerkstoff und/oder Karbonfasern gefertigt ist.

Das Fahrzeug kann ein Nutzfahrzeug sein, vorzugsweise ein Lastkraftwagen, z. B. ein wasserstoffbetriebener LKW. Der wasserstoffbetriebene LKW kann einen Energiewandler für den Wasserstoff aufweisen, z. B. ein Brennstoffzellensystem. Der LKW kann jedoch auch ein LKW sein, der von einem Wasserstoff-Verbrennungsmotor angetrieben ist.

In einer besonders bevorzugten Ausführungsform umfasst das Fahrzeug einen Trägerrahmen (Leiterrahmen), aufweisend zwei voneinander beabstandete und über mehrere Querträger miteinander verbundene Rahmen-Längsträger. Am Trägerrahmen können z. B. zwei Wasserstofftanks gehaltert sein, so dass an jedem Rahmen-Längsträger jeweils ein Wasserstofftank gehaltert ist, nämlich in einer eigenen Aufprallschutzvorrichtung, wie hierin beschrieben. Die Aufprallschutzvorrichtungen sind dabei bevorzugt an den Seiten der Rahmen-Längsträger gehaltert, die - in Fahrzeugquerrichtung gesehen - der Fahrzeugaußenseite zugewandt ist.

Gemäß einer bevorzugten Ausführungsvariante hiervon umfasst die mindestens eine Aufprallschutzvorrichtung hierbei eine erste Aufprallschutzvorrichtung, die an einem ersten der beiden Rahmen-Längsträger gehaltert ist und eine zweite Aufprallschutzvorrichtung, die an einem zweiten der beiden Rahmen-Längsträger gehaltert ist.

Gemäß einem weiteren Aspekt der Offenbarung können die kastenförmigen Crashstrukturen der ersten und zweiten Aufprallschutzvorrichtungen durch mindestens eine Querstrebe zur Durchleitung und Verteilung von Aufprallkräften bei einem Crashfall, die sich von der einen auf die andere Nutzfahrzeugseite erstreckt, miteinander verbunden sein. Mittels der mindestens einen Querstrebe kann erreicht werden, dass im Falle einer seitlichen Kollision die Kräfte auch auf die andere Rahmenseite geleitet werden und somit großflächiger verteilt werden. Dadurch kann Crash-Energie noch besser abgebaut werden, ohne den Tank zu deformieren. Die mindestens eine Querstrebe erstreckt sich bevorzugt in Fahrzeugquerrichtung. Bevorzugt sind zwei, drei oder mehr derartige Querstreben vorgesehen.

Nach einem weiteren Aspekt der Offenbarung kann sich die mindestens eine Querstrebe unterhalb und quer zu den Rahmen-Längsträgern erstrecken. Ferner kann die mindestens eine Querstrebe an einem unteren Längsträger der kastenförmigen Crashstrukturen befestigt, vorzugsweise dort angelenkt, sein.

Nach einem weiteren Aspekt der Offenbarung kann die mindestens eine Querstrebe so ausgeführt sein, dass sie im Crashfall unter Abbau von Aufprallkräften deformierbar ist. Die Crashsicherheit wird dadurch weiter erhöht.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine schematische Perspektivansicht eines Fahrzeugs gemäß einer Ausführungsform;
- Figur 2: eine schematische Perspektivansicht zweier über Querträger verbundener Aufprallschutzvorrichtungen gemäß einer Ausführungsform;
- Figur 3: eine schematische Perspektivansicht einer Aufprallschutzvorrichtung gemäß einer Ausführungsform;
- Figur 4: eine schematische Schnittdarstellung einer Aufprallschutzvorrichtung gemäß einer Ausführungsform;
- Figur 5: eine schematische Perspektivansicht einer Aufprallschutzvorrichtung gemäß einer weiteren Ausführungsform; und
- Figuren 6 & 7: perspektivische Detaildarstellungen der Aufprallschutzvorrichtung aus Figur 5.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

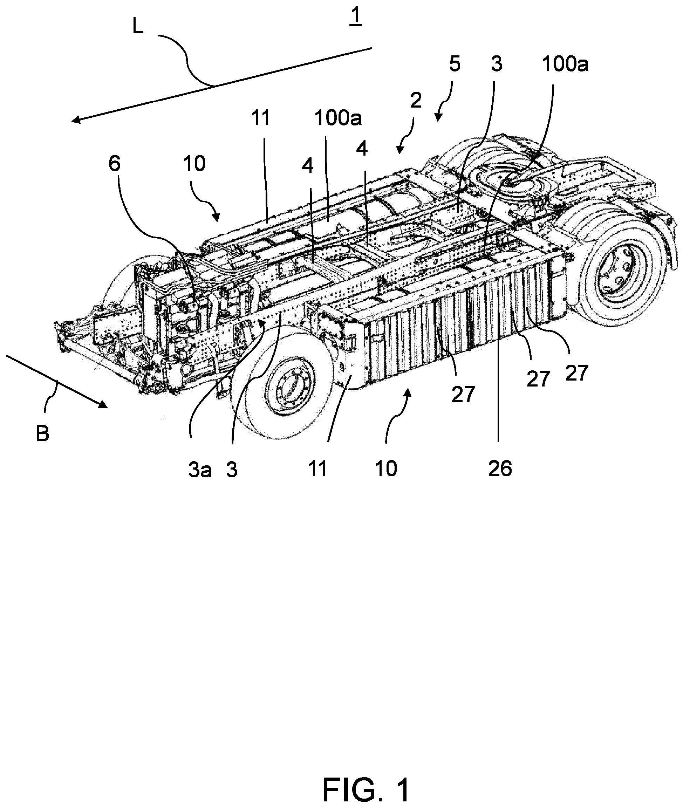

Figur 1 zeigt eine schematische Perspektivansicht eines Fahrzeugs gemäß einer Ausführungsform. Von dem Fahrzeug 1 ist in Figur 1 nur das Fahrgestell 5 dargestellt. Das Fahrgestell 5 umfasst einen Trägerrahmen 2. Der Trägerrahmen 2 umfasst zwei voneinander beabstandete und über mehrere Querträger 4 miteinander verbundene Rahmen-Längsträger 3. Die Rahmen-Längsträger erstrecken in Längsrichtung L des Fahrzeugs.

Zwischen den Rahmen-Längsträgern ist ein Energiewandler 6, z. B. hier ein Brennstoffzellensystem zur Umwandlung von Wasserstoff in elektrische Energie vorgesehen. Der Energiewandler 6 wird mit Wasserstoff aus einem Tanksystem zur Aufnahme/Speicherung von Wasserstoff versorgt. Das Tanksystem umfasst zwei Wasserstoff-Tanks 100a (Drucktanks). Der Wasserstoff ist in den Drucktanks unter hohem Druck als Gas oder Flüssiggas gespeichert. Die Drucktanks 100a können Raumtemperatur aufweisen oder auch tiefkalten Wasserstoff als Cryo-Gas oder mit flüssiger Phase speichern.

Die Wasserstoff-Tanks 100a sind jeweils an einer Außenseite 3a der Rahmenlängsträger, d. h. an der der Fahrzeugaußenseite zugewandten Seite, der Rahmenlängsträger 3 angeordnet. Die Wasserstofftanks 100a können zumindest teilweise aus einem Verbundwerkstoff gefertigt sein. Dadurch kann das Gewicht des (leeren) Tanks reduziert und gleichzeitig dessen Festigkeit erhöht werden.

Ungeachtet dessen sind die Wasserstoff-Tanks an der Fahrzeugaußenseite dem Risiko eines crash-bedingten Aufprallereignisses ausgesetzt.

Um die Wasserstoffs-Tanks 100a vor Aufprallbeschädigungen, z. B. im Crashfall, zu schützen, sind diese jeweils vorliegend in einer Aufprallschutzvorrichtung 10 gelagert und mittels der Aufprallschutzvorrichtung am Rahmen-Längsträger 3 befestigt bzw. gehaltert.

Die Aufprallschutzvorrichtung 10 für jeden Wasserstoff-Tank 100a umfasst eine kastenförmige Crashstruktur 11, z. B. eine Crash-Bock, die einen Hohlraum 12 zur Aufnahme und Halterung des Tanks 100a aufweist.

Die kastenförmige Crashstruktur dient zum Schutz des darin gehalterten Wasserstofftanks 100a und/oder zum Energieabbau bei einer crashbedingten Energieeinwirkung auf die Aufprallschutzvorrichtung 10. Vorteilhaft ist die Crash-Struktur vorliegend als Metallkonstruktion ausgebildet, d. h., sie ist aus mehreren Metallteilen zusammengebaut.

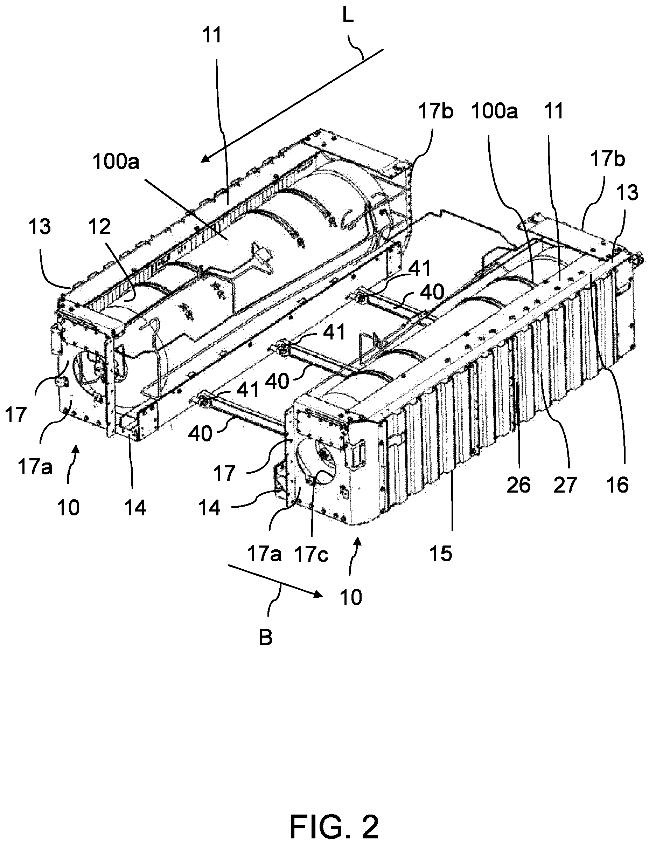

Der Aufbau der beiden Aufprallschutzvorrichtungen 10 ist in der Figur 2 besser erkennbar. Figur 2 zeigt ferner, dass die beiden Aufprallschutzvorrichtungen 10, die an den beiden Außenseiten des Fahrzeugs 1 jeweils an einer Außenseite 3a eines Rahmen-Längsträger 3 gehaltert sind, optional über mehrere Querstreben 40 miteinander verbunden sind. Vorliegend sind dies beispielhaft drei Querstreben 40. Mittels dieser Querstreben 40, die sich in einer mit der Fahrzeugquerrichtung korrespondierenden Breitenrichtung B der Crashstruktur erstrecken, kann erreicht werden, dass im Falle einer seitlichen Kollision die Crash-Kräfte von einer Rahmenseite auch auf die andere Rahmenseite geleitet werden und somit großflächiger verteilt werden. Dadurch kann Crash-Energie noch besser abgebaut werden, ohne den Tank zu deformieren.

Die Querstreben 40 erstrecken sich dabei unterhalb und quer zu den Rahmen-Längsträgern 3. Dabei sind die Querstreben 40 jeweils an einem unteren Längsträger 14 der kastenförmigen Crashstrukturen befestigt, z. B. dort mittels Gelenken 41 angelenkt. Es ist auch möglich, dass die Querstreben 40 so ausgeführt sind, dass sie im Crashfall unter Abbau von Aufprallkräften deformierbar sind. D. h., es ist auch möglich, die Querstreben 40 so auszuführen, dass ein Teil der Energie durch Deformation in den Querstreben 40 abgebaut wird. Dadurch können die Crash-Kräfte noch besser abgebaut werden. Die Crashsicherheit wird dadurch weiter erhöht. Der Tank 100a überträgt im Crashfall nur für die Tankstruktur unkritische Lasten an die Metallstruktur und ist an der Energieaufnahme nicht wesentlich beteiligt.

Die beiden in Figur 2 gezeigten Aufprallschutzvorrichtungen 10 bzw. deren Crashstruktur 11 sind in Prinzip baugleich ausgeführt.

Die kastenförmige Crashstruktur bzw. die Crash-Box 11 umfasst zwei untere Längsträger 14, 15 und nur einen oberen Längsträger 16. Die Längsträger erstrecken sich im am Rahmen-Längsträger 3 montierten Zustand in Längsrichtung L des Fahrzeugs. Die Längsträger können einteilig oder mehrteilig ausgeführt sein. Die Längsträger können beispielsweise aus Blechen, die eine Dicke im Millimeterbereich (z. B. 2, 3 oder 4 mm) aufweisen, hergestellt sein. Eine vorteilhafte mehrteilige Ausführung wird nachfolgend noch beschrieben.

Die kastenförmige Crashstruktur 11 umfasst ferner eine vordere 17a und eine hintere 17b Stirnwand, die jeweils an einer der Stirnseiten 17 der Crashstruktur 11 an den Längsträgern 14, 15, 16 befestigt sind. Die Stirnwände 17a und 17b sind ebenfalls als Blechbauteil gefertigt. Die Stirnwände 17a, 17b können optional jeweils einen Ausnehmung 17c, z. B. hier in Form einer Kreisöffnung, aufweisen. Dadurch kann das Gewicht reduziert und der Zugang zum Tank 100b erleichtert werden. Die Stirnwände 17a, 17b können mit den Längsträgern 14, 15 und 16 durch Verschrauben, Verstiften, Vernieten und/oder Verschweißen verbunden sein.

Die kastenförmige Crashstruktur 11 umfasst ferner eine Deformationseinrichtung 26, die an einer äußeren Seitenwand 13 der Crashstruktur angeordnet ist oder die äußere Seitenwand 13 ausbildet. Die Deformationseinrichtung 26 ist im Crashfall unter Abbau von Aufprallkräften deformierbar. Dies kann z. B. dadurch realisiert sein, dass die Deformationseinrichtung 26 mehrfach gebogene Metallprofile 27, vorzugsweise ausgeführt als Hutprofile, aufweist. Diese können z. B. eine Beplankung der Seitenwand 13 ausbilden. Die Metallprofile 27 bilden hier somit eine Anordnung von Crash-Rippen aus, die sich im Crashfall unter Abbau von Aufprallkräften deformieren (können).

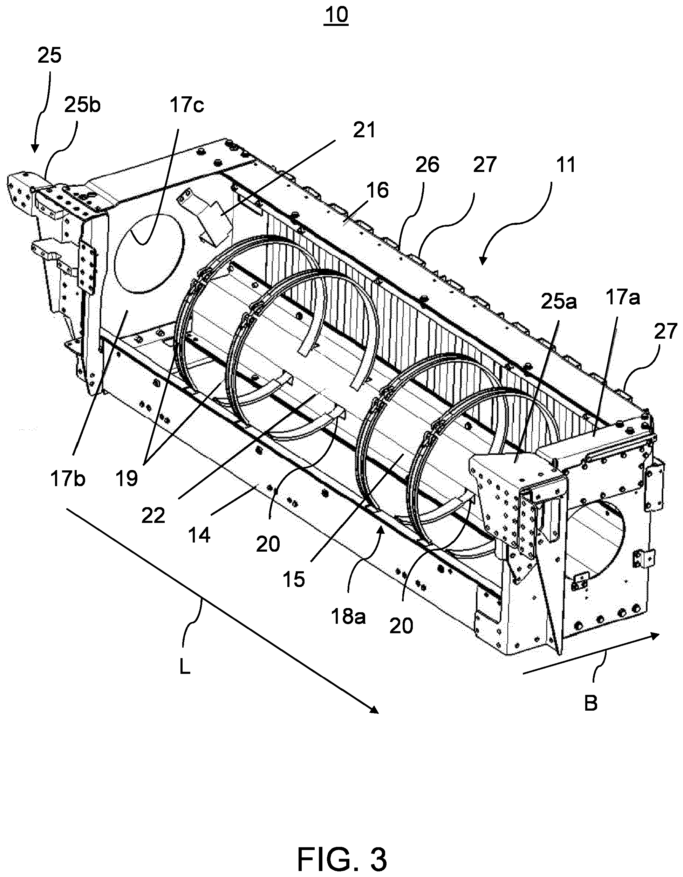

Die Aufprallschutzvorrichtung 10 umfasst ferner eine Montagevorrichtung 25 zur Befestigung der Crashstruktur 11 an dem Trägerrahmen 2, vorzugsweise an einem der Rahmenlängsträger 3 des Fahrzeugs 1. Dies ist in der Ansicht der Figur 3 gut erkennbar. Figur 3 zeigt eine schematische Perspektivansicht einer Aufprallschutzvorrichtung. In Figur 3 ist im Unterschied zu den Figuren 1 und 2 nur die Aufprallschutzvorrichtung 10 gezeigt - ohne den Wasserstofftank.

Die Montagevorrichtung 25 umfasst zwei Montageböcke 25a, 25b, die als Träger der Stirnwände 17a, 17b dienen. Die Montageböcke werden daher nachfolgend auch als Stirnwandträger 25a, 25b bezeichnet. Die Stirnwandträger 25a, 25b sind als Blechbauteile ausgeführt und werden jeweils mit einem der Rahmen-Längsträger 3 verschraubt, um die Stirnwandträger 25a, 26b an dem jeweiligen Rahmen-Längsträger 3 zu befestigen.

Anschließend wird die kastenförmige Crash-Struktur 11 an den Stirnwandträgern 25a, 25b befestigt, in dem die Stirnwände 17a, 17b an den Stirnwandträgern 25a, 26b befestigt werden, z. B. in dem die Stirnwände 17a, 17b mit den Stirnwandträgern 25a, 26b verstiftet, verschraubt, vernietet und/oder verschweißt werden. Alternativ ist es auch möglich, den vorderen Stirnwandträger 25a und die vordere Stirnwand 17a als ein Bauteil auszuführen. Entsprechendes können der hintere Stirnwandträger 25b und die hintere Stirnwand 17b als ein Bauteil ausgeführt sein.

Die Stirnwandträger 25a, 25b können eine rasterförmige Lochstruktur aufweisen, worüber die Bauteile verschraubt werden können. Das Rastermaß der Lochstruktur kann dem Rastermaß der rasterförmigen Lochstruktur der Rahmenlängsträger entsprechen. Der vordere Stirnwandträger 25b kann auch als Auflager für einen hinter dem Fahrerhaus eines LKWs angebrachten Turm verwendet werden.

In Figur 3 ist gut erkennbar, dass die kastenförmige Crashstruktur 11 zumindest zu einer Seite hin offen sein kann. Vorliegend ist die Crashstruktur 11 beispielsweise zu der Seite, die gegenüberliegend von der Deformationseinrichtung 26 liegt, hin offen. Ferner ist die kastenförmige Crashstruktur nach oben hin offen.

Die Aufprallschutzvorrichtung 10 umfasst ferner eine Haltevorrichtung 18a für den Tank 100a, die in die kastenförmige Crashstruktur 11 integriert ist. Die Haltevorrichtung 18a kann dabei mehrere Haltekomponenten umfasst. So kann die Haltevorrichtung 18a mehrere Spannbänder 19 aufweisen, die durch Aufnahmen 20 in den unteren Längsträgern 14, 15 geführt sind. Lediglich beispielhaft sind hier vier Spannbänder 19 gezeigt. Die Spannbänder 19 sind dazu ausgebildet, den Tank 100a umfangseitig zu umschlingen und durch Festziehen der Spannbänder 19 zu verspannen. Die Spannbänder können als Metallbänder mit einem Verspannmechanismus ausgeführt sein. Dadurch können besonders vorteilhaft Tanks mit zylinderförmigen Grundkörper innerhalb der Crashstruktur gesichert werden.

Die Haltevorrichtung 19a kann ferner einen Anschlag 21 aufweisen, vorzugsweise zur Verhinderung eines Verrutschens des Tanks in einer Längsrichtung der Crashstruktur, der an einer der Stirnwände 17b angeordnet ist. Der Anschlag 21 ist hier als bügelförmiger Anschlag und als Blechbauteil ausgeführt, der innenseitig an der Stirnwand 17b angeordnet ist und sich in Richtung der Tanks (hier nicht gezeigt) erstreckt. Die sichere Lagerung des Tanks wird dadurch verbessert.

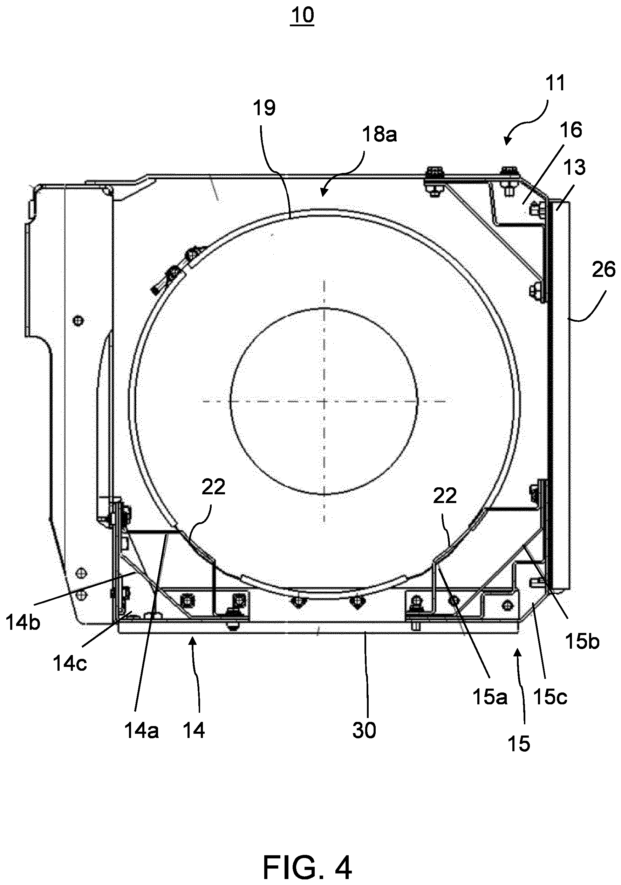

Die Haltevorrichtung kann ferner Auflagen für den Tank, die an einem Bodenbereich der Crashstruktur angeordnet sind, aufweisen. Die Auflagen sind gut in Figur 4 erkennbar, die einen Querschnitt der Aufprallschutzvorrichtung 10 der Figur 3 zeigt. Die Auflagen 22 können z. B. Auflagebleche aufweisen, die an den unteren Längsträgern angeordnet sind und/oder einen Teil davon ausbilden. Die Auflagen können z. B. schräge oder an die Tankkrümmung angepasste gekrümmte Auflageflächen aufweisen, die z. B. als angeschrägte Konsolen ausgebildet sein können.

Im Ausführungsbeispiel der Figur 4 sind die Auflagen 22 durch ein Blechteil 14a bzw. 15a ausgebildet, das jeweils ein (Bestand-)Teil eines der unteren Längsträger 14 bzw. 15 ist. Der untere Längsträger 14 ist hier durch beispielhaft durch drei Blechteile 14a, 14b und 14c gebildet, die übereinander sandwichartig und in Längsrichtung L verlaufend angeordnet und miteinander verschraubt sind. Das obere Teil 14a bildet dabei eine Auflagefläche für den Tank aus. Entsprechend analog ist der andere untere Längsträger 15 durch die Blechteile 15a, 15b und 15c aufgebaut. Der Tank liegt somit auf den oberen Blechen 14a und 15a auf. Die Längsträger 14 und 15 sind hier entsprechend mehrteilig ausgeführt.

Dies ist u. a. deswegen vorteilhaft, da durch entsprechende Gestaltung der Bleche 14a und 15a die Crashstruktur bzw. die Crashbox 10 für verschiedene Tankdurchmesser genutzt werden kann, ohne die Festigkeitseigenschaften wesentlich zu verändern. So können zur Aufnahme eines Tanks mit anderem Durchmesser z. B. jeweils die oberen Blechteile 14a und 15a ausgetauscht werden durch andere obere Blechteile 14a und 15a, die zweckmäßig an den anderen Tank mit geänderten Durchmesser angepasst sind.

Die Aufprallschutzvorrichtung 10 weist optional ferner einen Steinschlagschutz 30 für den Tank 100a auf, der an einer Unterseite der kastenförmigen Crashstruktur angeordnet ist. Der Steinschlagschutz 30 ist hier z. B. als Schutzblech ausgeführt. In Figur 4 ist ferner die seitlich angeordnete Deformationseinrichtung 26 zur Aufnahme von seitlichen Crash-Kräften gut zu erkennen.

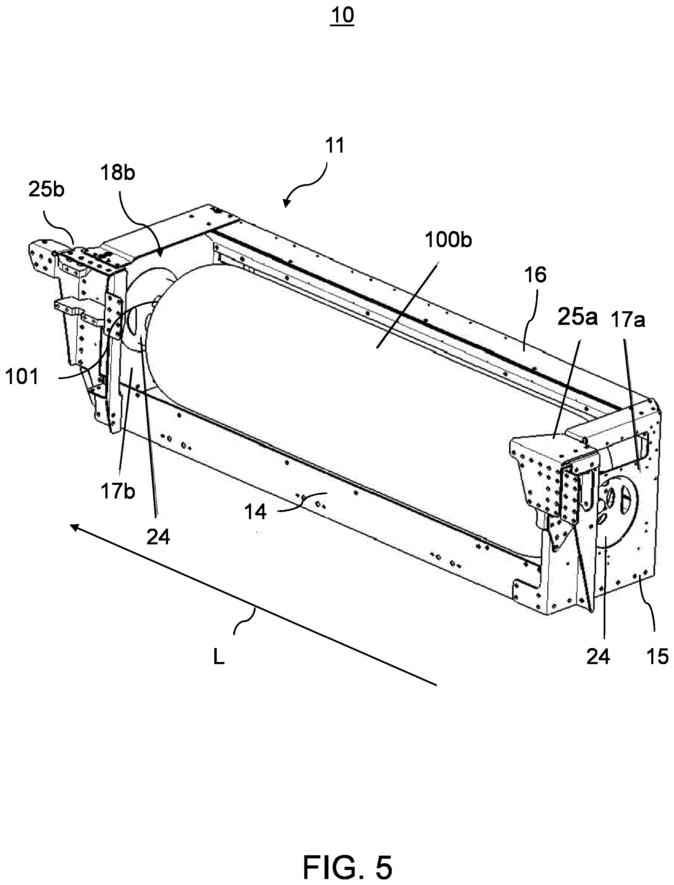

Die Haltevorrichtung kann ferner zur Halterung eines Tanks mit Halslagerung ausgeführt sein. Ein solche Haltevorrichtung 18b ist in den Figuren 5 bis 7 gezeigt. Es versteht sich, dass die unter Bezugnahme auf die Figuren 5 bis 7 beschriebenen Techniken und Merkmale mit den Techniken und Merkmalen, die unter Bezugnahme auf die Figuren 1 bis 4 beschrieben sind, kombinierbar sind, einzeln oder in jeglicher Kombination.

Figur 5 zeigt eine schematische Perspektivansicht einer Aufprallschutzvorrichtung 10 gemäß einer weiteren Ausführungsform, die einen Tank 100b mit Halslagerung aufnimmt und haltert. Die Besonderheit der in Figur 5 gezeigten Ausführungsform der Aufprallschutzvorrichtung 10 ist, dass die Haltevorrichtung 18b zwei Befestigungselemente 24 zur Lagerung eines Halsbereichs 101 des Tanks 100b aufweist. Die Befestigungselemente 24 nachfolgend auch als Lagerelemente 24 bezeichnet. Eines der Lagerelemente 24 ist an der hinteren Stirnwand 17b, das andere Lagerelement 24 an der vorderen Stirnwand 17a angeordnet.

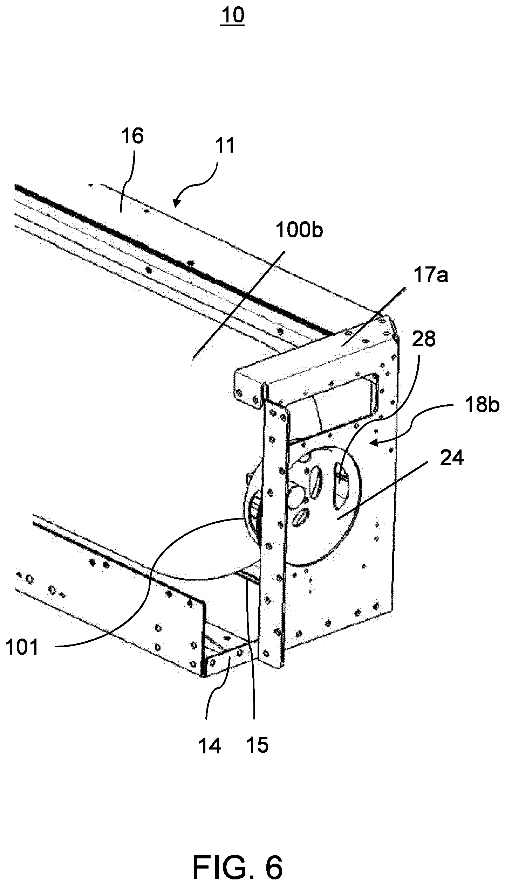

In der gezeigten Ausführungsform sind die Lagerelemente 24 z.B. jeweils topfförmig ausgeführt und an einer der Stirnwänden 17a 17b der Crash-Struktur lösbar befestigt. Die lösbare Befestigung erleichtert die Montage. Die topförmigen Lagerelemente 24 können dabei Aussparungen 18, z. B. als Löcher, aufweisen, was in Figur 6 gut erkennbar ist.

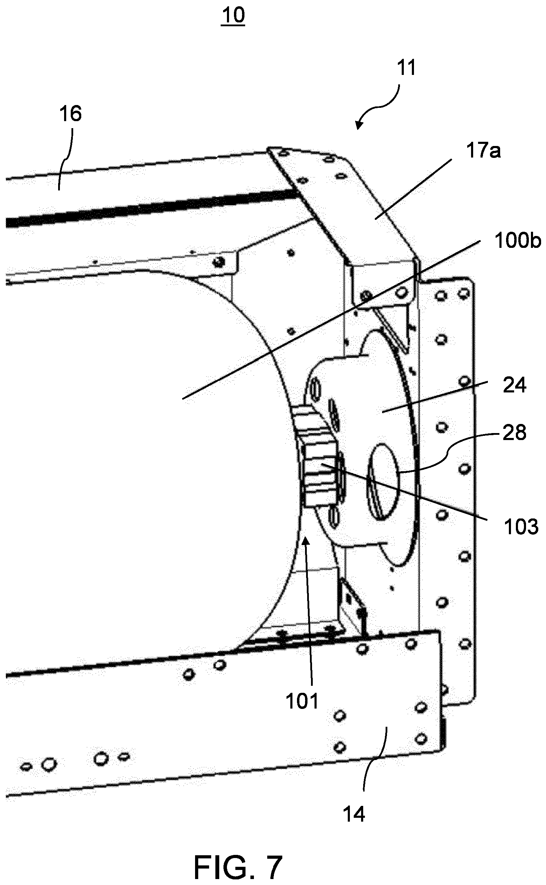

Eine weitere Detaildarstellung der Halslagerung ist in Figur 7 gezeigt. Gemäß diesem Ausführungsbeispiel für Tanks 100b mit Halslagerung wird der Tank 100b über einen Lagerbock 103 mit einem der Lagerelemente 24 verbunden. Die Lagerelemente 24 sind somit zur Aufnahme eines Lagerbocks 103 ausgeführt, der wiederum einen Lagerzapfen (nicht dargestellt) des Tanks 100b umschließt. Die Lagerzapfen können z. B. an einem stirnseitigen Endbereich des Tanks metallisch in diesen eingewickelt sein und aus diesen in Längsrichtung L herausragen. Die Lagerelemente 24 sind hinsichtlich ihrer Festigkeit bevorzugt so ausgelegt, dass sie im Crashfall vor dem Lagerbock und dem Lagerzapfen brechen, um eine Ausbruch des Lagerzapfens des Tanks im Crashfall besser verhindern zu können. Durch die Crash-Box 11 bzw. denn dadurch bereitgestellten Metallrahmen wird die Belastung auf die metallischen in den Tank 100b eingewickelten Endstücke (Lagerzapfen) reduziert.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen.

### Bezugszeichenliste

- 1: Nutzfahrzeug
- 2: Trägerrahmen
- 3: Rahmen-Längsträger
- 3a: Außenseite
- 4: Rahmen-Querträger
- 5: Fahrgestell
- 6: Energiewandler, z.B. Brennstoffzellensystem
- 10: Aufprallschutzvorrichtung
- 11: Crashstruktur
- 12: Hohlraum
- 13: Seitenwand
- 14: Unterer Längsträger
- 14a, 14b, 14c: Blechteile
- 15: Unterer Längsträger
- 15a, 15b, 15c: Blechteile
- 16: Oberer Längsträger
- 17: Stirnseite
- 17a, 17b: Stirnwand
- 17c: Ausnehmung
- 18a, 18b: Haltevorrichtung
- 19: Spannband
- 20: Aufnahme
- 21: Anschlag
- 22: Auflage,
- 23: Bodenbereich
- 24: Lagerelement
- 25: Montagevorrichtung
- 25a, 25b: Stirnwandträger, Montagebock
- 26: Deformationseinrichtung
- 27: Metallprofile
- 28: Aussparung
- 30: Steinschlagschutz
- 40: Querstrebe
- 41: Anlenkung
- 100a, 100b: Tank
- 101: Halsbereich
- 103: Lagerbock
- L: Längsrichtung
- B: Breitenrichtung

## Patentansprüche

1. Aufprallschutzvorrichtung (10) für einen Tank (100a; 100b) zum Speichern von Gas- und/oder Flüssiggas als Kraftstoff für ein Fahrzeug (1), umfassend
eine kastenförmige Crashstruktur (11), vorzugsweise zum Energieabbau bei einer crashbedingten Energieeinwirkung auf die Aufprallschutzvorrichtung, wobei die kastenförmige Crashstruktur (11) einen Hohlraum (12) zur Aufnahme und Halterung des Tanks (100a; 100b) aufweist **dadurch gekennzeichnet, dass** die kastenförmige Crashstruktur (11) als Metallkonstruktion ausgebildet ist, wobei die kastenförmige Crashstruktur (11) zwei untere Längsträger (14, 15) und nur einen oberen Längsträger (16) umfasst, wobei die kastenförmige Crashstruktur (11) eine vordere (17a) und eine hintere (17b) Stirnwand, die jeweils an einer der Stirnseiten (17) der Crashstruktur (11) an den Längsträgern (15, 16) befestigt sind, umfasst.

2. Aufprallschutzvorrichtung (10) nach Anspruch 1,
ferner aufweisend eine Montagevorrichtung (25), vorzugsweise mehrere Konsolen oder Montageböcke (25a, 25b), zur Befestigung der Crashstruktur (11) an einem Trägerrahmen (2), vorzugsweise einem Rahmenlängsträger (3), des Fahrzeugs (1).

3. Aufprallschutzvorrichtung (10) nach einem der vorherigen Ansprüche,
wobei die kastenförmige Crashstruktur (11) umfasst: eine Deformationseinrichtung (26), die an einer Seitenwand (13) der Crashstruktur angeordnet ist oder die Seitenwand (13) ausbildet, und die im Crashfall unter Abbau von Aufprallkräften deformierbar ist.

4. Aufprallschutzvorrichtung (10) nach Anspruch 3,
wobei die Deformationseinrichtung (26) mehrfach gebogene Metallprofile (27), vorzugsweise ausgeführt als Hutprofile, aufweist, die vorzugsweise eine Beplankung der Seitenwand (13) ausbilden.

5. Aufprallschutzvorrichtung (10) nach einem der vorherigen Ansprüche,
ferner aufweisend eine Haltevorrichtung (18a, 18b) für den Tank (100a; 100b), die in die kastenförmige Crashstruktur (11) integriert ist.

6. Aufprallschutzvorrichtung (10) nach Anspruch 5, wobei die Haltevorrichtung (18a) umfasst:
a) Spannbänder (19), die durch Aufnahmen (20) in den unteren Längsträgern (14, 15) geführt sind;
b) einen Anschlag (21), vorzugsweise zur Verhinderung eines Verrutschens des Tanks (100a) in einer Längsrichtung der Crashstruktur, der an einer der Stirnwände (17b) angeordnet ist, und/oder
c) Auflagen (22) für den Tank (100a), die an einem Bodenbereich (23) der Crashstruktur (11) angeordnet sind, und vorzugsweise Auflagebleche (22) aufweisen, die an den unteren Längsträgern (14, 15) angeordnet sind.

7. Aufprallschutzvorrichtung (10) nach Anspruch 5 oder 6,
wobei die Haltevorrichtung (18b) zur Halterung eines Tanks (100b) mit Halslagerung ausgeführt ist und zwei Lagerelemente (24) zur Lagerung eines Halsbereichs (101) des Tanks (100b) aufweist, die an den Stirnwänden (17a, 17b) der Crash-Struktur (11) angeordnet sind.

8. Aufprallschutzvorrichtung (10) nach Anspruch 7, wobei die Lagerelemente (24) jeweils topfförmig ausgeführt sind und an einer der Stirnwänden (17a, 17b) der Crash-Struktur (11) lösbar befestigt sind.

9. Aufprallschutzvorrichtung (10) nach einem der vorherigen Ansprüche,
ferner aufweisend einen Steinschlagschutz (30) für den Tank (100a, 100b), der an einer Unterseite der kastenförmigen Crashstruktur angeordnet ist, wobei der Steinschlagschutz vorzugsweise als Schutzblech ausgeführt ist.

10. Fahrzeug (1), vorzugsweise Lastkraftwagen, umfassend:
mindestens eine Aufprallschutzvorrichtung (10) nach einem der vorherigen Ansprüche; und
mindestens einen Tank (100a; 100b) zum Speichern von Gas- und/oder Flüssiggas als Kraftstoff für das Fahrzeug (1), vorzugsweise Wasserstoff-Tank, wobei der Tank (100a; 100b) im Hohlraum der kastenförmigen Crash-Struktur (11) aufgenommen und/oder gehaltert ist.

11. Fahrzeug (1) nach Anspruch 10, umfassend:
einen Trägerrahmen (2), aufweisend zwei voneinander beabstandete und über mehrere Querträger (4) miteinander verbundene Rahmen-Längsträger (3),
wobei die mindestens eine Aufprallschutzvorrichtung (10) eine erste Aufprallschutzvorrichtung (10) aufweist, die an einem ersten der beiden Rahmen-Längsträger (3) gehaltert ist und eine zweite Aufprallschutzvorrichtung (10) aufweist, die an einem zweiten der beiden Rahmen-Längsträger (3) gehaltert ist, wobei die kastenförmigen Crashstrukturen (11) der ersten und zweiten Aufprallschutzvorrichtungen (10) durch mindestens eine Querstrebe (40), die sich zur Durchleitung und Verteilung von Aufprallkräften bei einem Crashfall von der einen auf die andere Nutzfahrzeugseite erstreckt, miteinander verbunden sind.

12. Fahrzeug (1) nach Anspruch 11, wobei sich die mindestens eine Querstrebe (30) unterhalb und quer zu den Rahmen-Längsträgern (3) erstreckt und/oder an einem unteren Längsträger (15) der kastenförmigen Crashstrukturen (11) angelenkt ist.

13. Fahrzeug (1) nach Anspruch 11 oder 12, wobei die mindestens eine Querstrebe (30) so ausgeführt ist, dass sie im Crashfall unter Abbau von Aufprallkräften deformierbar ist.

## Claims

1. Impact protection device (10) for a reservoir (100a; 100b) for storing gas and/or liquid gas as fuel for a vehicle (1), comprising
a box-shaped crash structure (11), preferably for energy dissipation in the event of a crash-related energy impact on the impact protection device, wherein the box-shaped crash structure (11) has a cavity (12) for accommodating and holding the reservoir (100a; 100b) **characterized in that** the box-shaped crash structure (11) is designed as a metal construction, wherein the box-shaped crash structure (11) comprises two lower longitudinal member (14, 15) and only one upper longitudinal member (16), wherein the box-shaped crash structure (11) comprises a front (17a) and a rear (17b) end wall, which are each fastened to the longitudinal members (15, 16) at one of the front sides (17) of the crash structure (11).

2. Impact protection device (10) according to claim 1,
further comprising a mounting device (25), preferably several consoles or mounting blocks (25a, 25b), for fastening the crash structure (11) to a support frame (2), preferably a frame longitudinal member (3), of the vehicle (1).

3. Impact protection device (10) according to one of the preceding claims,
wherein the box-shaped crash structure (11) comprises: a deformation device (26) which is arranged on a side wall (13) of the crash structure or forms the side wall (13) and which is deformable in the event of a crash, thereby dissipating impact forces.

4. Impact protection device (10) according to claim 3,
wherein the deformation device (26) comprises multiple bent metal profiles (27), preferably designed as hat profiles, which preferably form a planking of the side wall (13).

5. Impact protection device (10) according to one of the preceding claims,
further comprising a holding device (18a, 18b) for the reservoir (100a; 100b), which is integrated into the box-shaped crash structure (11).

6. Impact protection device (10) according to claim 5, wherein the holding device (18a) comprises:
a) tension straps (19) which are guided through receptacles (20) in the lower longitudinal members (14, 15);
b) a stop (21), preferably for preventing the reservoir (100a) from slipping in a longitudinal direction of the crash structure, which is arranged on one of the end walls (17b), and/or
c) supports (22) for the reservoir (100a), which are arranged on a bottom region (23) of the crash structure (11) and preferably comprise support sheet metal (22) arranged on the lower longitudinal members (14, 15).

7. Impact protection device (10) according to claim 5 or 6,
wherein the holding device (18b) for holding a reservoir (100b) is designed with a neck bearing and comprises two bearing elements (24) for bearing a neck region (101) of the reservoir (100b), which are arranged on the end walls (17a, 17b) of the crash structure (11).

8. Impact protection device (10) according to claim 7, wherein the bearing elements (24) are each designed to be pot-shaped and are detachably fastened to one of the end walls (17a, 17b) of the crash structure (11).

9. Impact protection device (10) according to one of the preceding claims,
further comprising a stone chip guard (30) for the reservoir (100a, 100b), which is arranged on a bottom side of the box-shaped crash structure, wherein the stone chip guard is preferably designed as a protective sheet metal.

10. Vehicle (1), preferably a truck, comprising:
at least one impact protection device (10) according to one of the preceding claims; and
at least one reservoir (100a; 100b) for storing gas and/or liquid gas as fuel for the vehicle (1), preferably a hydrogen reservoir, wherein the reservoir (100a; 100b) is accommodated and/or held in the cavity of the box-shaped crash structure (11).

11. Vehicle (1) according to claim 10, comprising:
a support frame (2) having two frame longitudinal members (3) spaced apart from each other and connected to each other by means of several cross members (4),
wherein the at least one impact protection device (10) comprises a first impact protection device (10) which is held on a first of the two frame longitudinal members (3) and a second impact protection device (10) which is held on a second of the two frame longitudinal members (3), wherein the box-shaped crash structures (11) of the first and second impact protection devices (10) are connected to each other by at least one cross strut (40) which extends from one side of the commercial vehicle to the other in order to transmit and distribute impact forces in the event of a crash.

12. Vehicle (1) according to claim 11, wherein the at least one cross strut (30) extends below and transversely to the frame longitudinal members (3) and/or is articulated to a lower longitudinal member (15) of the box-shaped crash structures (11).

13. Vehicle (1) according to claim 11 or 12, wherein the at least one cross strut (30) is designed such that it can be deformed in the event of a crash, thereby dissipating impact forces.

## Revendications

1. Dispositif de protection contre les impacts (10) pour un réservoir (100a ; 100b) pour stocker du gaz et/ou du gaz liquéfié en tant que carburant pour un véhicule (1), comprenant
une structure de collision en forme de caisson (11), de préférence pour dissiper l'énergie lors d'une sollicitation énergétique due à une collision sur le dispositif de protection contre les impacts, la structure de collision en forme de caisson (11) présentant une cavité (12) pour recevoir et maintenir le réservoir (100a ; 100b), **caractérisé en ce que** la structure de collision en forme de caisson (11) est réalisée sous forme de construction métallique, la structure de collision en forme de caisson (11) comprenant deux longerons inférieurs (14, 15) et un seul longeron supérieur (16), la structure de collision en forme de caisson (11) comprenant une paroi frontale avant (17a) et une paroi frontale arrière (17b), qui sont chacune fixées à l'un des côtés frontaux (17) de la structure de collision (11) au niveau des longerons (15, 16).

2. Dispositif de protection contre les impacts (10) selon la revendication 1,
présentant en outre un dispositif de montage (25), de préférence plusieurs consoles ou supports de montage (25a, 25b), pour fixer la structure de collision (11) à un châssis porteur (2), de préférence un longeron de châssis (3), du véhicule (1).

3. Dispositif de protection contre les impacts (10) selon l'une quelconque des revendications précédentes, la structure de collision en forme de caisson (11) comprenant : un appareil de déformation (26) qui est agencé sur une paroi latérale (13) de la structure de collision ou qui réalise la paroi latérale (13) et qui, en cas de collision, peut se déformer en dissipant les forces d'impact.

4. Dispositif de protection contre les impacts (10) selon la revendication 3,
l'appareil de déformation (26) présentant des profilés métalliques (27) à courbures multiples, de préférence conçus sous forme de profilés en chapeau, qui réalisent de préférence un habillage de la paroi latérale (13).

5. Dispositif de protection contre les impacts (10) selon l'une quelconque des revendications précédentes, présentant en outre un dispositif de retenue (18a, 18b) pour le réservoir (100a ; 100b), qui est intégré dans la structure de collision en forme de caisson (11).

6. Dispositif de protection contre les impacts (10) selon la revendication 5, le dispositif de retenue (18a) comprenant :
a) des bandes de serrage (19) qui sont guidées à travers des logements (20) dans les longerons inférieurs (14, 15) ;
b) une butée (21), de préférence pour empêcher un glissement du réservoir (100a) dans une direction longitudinale de la structure de collision, qui est agencée sur l'une des parois frontales (17b), et/ou
c) des soutiens (22) pour le réservoir (100a), qui sont agencés au niveau d'une zone de fond (23) de la structure de collision (11) et présentent de préférence des tôles de soutien (22) agencées sur les longerons inférieurs (14, 15).

7. Dispositif de protection contre les impacts (10) selon la revendication 5 ou 6,
le dispositif de fixation (18b) pour maintenir un réservoir (100b) étant conçu avec un palier de col et présentant deux éléments de palier (24) pour supporter une zone de col (101) du réservoir (100b), qui sont agencés sur les parois frontales (17a, 17b) de la structure de collision (11).

8. Dispositif de protection contre les impacts (10) selon la revendication 7, les éléments de palier (24) étant chacun conçus en forme de pot et étant fixés de manière amovible à l'une des parois frontales (17a, 17b) de la structure de collision (11).

9. Dispositif de protection contre les impacts (10) selon l'une quelconque des revendications précédentes, présentant en outre une protection contre les projections de pierres (30) pour le réservoir (100a, 100b), qui est agencée sur un côté inférieur de la structure de collision en forme de caisson, la protection contre les projections de pierres étant de préférence conçue sous forme de tôle de protection.

10. Véhicule (1), de préférence camion, comprenant :
au moins un dispositif de protection contre les impacts (10) selon l'une quelconque des revendications précédentes ; et
au moins un réservoir (100a ; 100b) pour stocker du gaz et/ou du gaz liquéfié en tant que carburant pour le véhicule (1), de préférence un réservoir d'hydrogène, le réservoir (100a ; 100b) étant reçu et/ou maintenu dans la cavité de la structure de collision en forme de caisson (11).

11. Véhicule (1) selon la revendication 10, comprenant :
un châssis porteur (2), présentant deux longerons de châssis (3) espacés l'un de l'autre et reliés entre eux par l'intermédiaire de plusieurs traverses (4),
l'au moins un dispositif de protection contre les impacts (10) présentant un premier dispositif de protection contre les impacts (10) qui est fixé à un premier des deux longerons de châssis (3) et un deuxième dispositif de protection contre les impacts (10) qui est fixé à un deuxième des deux longerons de châssis (3), les structures de collision en forme de caisson (11) des premier et deuxième dispositifs de protection contre les impacts (10) étant reliées entre elles par au moins une entretoise transversale (40) qui s'étend d'un côté à l'autre du véhicule utilitaire pour transmettre et répartir les forces d'impact lors d'une collision.

12. Véhicule (1) selon la revendication 11, l'au moins une entretoise transversale (30) s'étendant en dessous et transversalement par rapport aux longerons de châssis (3) et/ou étant articulée sur un longeron inférieur (15) des structures de collision (11) en forme de caisson.

13. Véhicule (1) selon la revendication 11 ou 12, l'au moins une entretoise transversale (30) étant conçue de manière à pouvoir se déformer en cas de collision en dissipant les forces d'impact.
